# EUROPÄISCHE PATENTANMELDUNG

(11) **EP 1 531 311 A1**
(43) Veröffentlichungstag der Anmeldung: **18.05.2005**
(21) Anmeldenummer: 04026354.3
(22) Anmeldetag: 05.11.2004
(51) Int. Cl.: F25D 13/00, F25B 27/00

(54) **Raumzelle zur temperierten Aufbewahrung von insbesondere Lebensmitteln**

(30) Priorität: 17.11.2003 DE 20317766 U
(71) Anmelder: Viessmann Kältetechnik AG, 95030 Hof/Saale (DE)
(72) Erfinder: Dipl.-Ing. Darkow, Heinz-Dieter, 95028 Hof (DE)
(74) Vertreter: Wolf, Günter, Dipl.-Ing.

(57) **Zusammenfassung**

Die Erfindung betrifft eine Raumzelle zur temperierten Aufbewahrung von insbesondere Lebensmitteln aber auch sonstigen temperaturempfindlichen Gütern, bestehend aus einem zugänglich begehbaren, allseitig wärmeisolierten, kastenförmigen Gehäuse (1), mit integriertem Kühlaggregat (7).

Der Innenraum des Gehäuses (1), das aus einem tragfähigen und wärmeisolierten Boden (20) gebildet ist und auf dem die Gehäusewände (21) und die Gehäusedecke (22) aus vorgefertigten, miteinander dicht verspannbaren Wandbauelementen (23) errichtet sind, ist dabei in einen Aufbewahrungsraum (2) und einen Betriebsmittelraum (3) vertikal oder horizontal gegliedert, wobei der Aufbewahrungsraum (2) mit Mitteln (4) zu dessen Temperierung versehen ist, und daß im Betriebsmittelraum (3) eine mit einer Betriebsmittelquelle (5) verbundene Brennstoffzelle (6) angeordnet ist, die elektrisch mit dem ebenfalls im Betriebsmittelraum (3) angeordneten Kühlaggregat (7) in Wirkverbindung steht. Der Betriebsmittelraum (3) ist dabei vom Aufbewahrungsraum (2) durch eine wärmeisolierte Trennwand (8) abgeteilt.

## Beschreibung

Die Erfindung betrifft eine Raumzelle zur temperierten Aufbewahrung von insbesondere Lebensmitteln, aber auch anderen temperaturempfindlichen Gütern, bestehend aus einem zugänglich begehbaren, allseitig wärmeisolierten, kastenförmigen Gehäuse mit integriertem Kühlaggregat.

Derartige Raumzellen sind hinlänglich bekannt und in Benutzung, so daß es diesbezüglich an sich keines besonderen druckschriftlichen Nachweises bedarf. Verwiesen sei aber hierzu bspw. auf DE-A-92 13 472 U1 und DE-A-297 02 209 U1. Solche Raumzellen werden insbesondere als sogenannte Kühl-und Frischhaltezellen genutzt, deren Kühlaggregate, soweit bekannt, mittels externer Stromzufuhr betrieben werden. Da Weltgegenden mit Extremtemperaturen, bspw. in Wüsten- oder Arktisbereichen in der Regel auch nicht über eine ohne weiteres verfügbare Stromversorgung verfügen, können derartige Raumzellen in solchen Bereichen dort auch nicht genutzt werden, da diese bzgl. ihrer Energieversorgung nicht autark betreibbar sind, es sei denn, es wird zur Energieversorgung ein Strom- bzw. Notstromaggregat benutzt, dessen Betrieb jedoch mit einer entsprechenden Umweltbelastung verbunden ist. Diesbezüglich sei darauf hingewiesen, daß derartige in der Regel dieselbetriebene Stromaggregate, soweit bekannt, in arktischen Bereichen aus diesem Grunde nicht mehr benutzt werden dürfen.
Soweit hier von temperierter Aufbewahrung die Rede ist, so gilt dies auch für jahreszeitlich extrem kalte Bereiche, in denen es eher darum geht, Lebensmittel oder was es auch sein mag nicht solchen Extremtemperaturen auszusetzen, d.h., in solchen Bereichen muß die Temperatur des Aufbewahrungsraumes solcher Zellen auf verträglicher Höhe, d.h. bspw. auf Frischhaltetemperatur (7-10°C) gebracht und gehalten werden, die bspw. auch für entsprechend temperaturempfindliche Gerätschaften hinnehmbar sind. Insoweit ist der einleitende Bezug auf insbesondere Lebensmittel nicht so eng zu sehen und bezieht sich insoweit gemäß Einleitung auch ganz allgemein auf temperaturempfindliche Güter, wie bspw. Meßgeräte oder mit empfindlicher Elektronik arbeitende Geräte.

Autark arbeitende Kühlgeräte, diese allerdings in Form eines Reisekoffers und zwar für die Mitführung temperaturempfindlicher Medikamente, sind nach DE-A-203 05 416 U1 bekannt, die mit Peltier-Kühlelementen arbeiten, welche einerseits den Boden bzw. eine Wand einer Kühlkammer bilden und unter Einbindung einer Wärmeleitbrücke andereseits der Umgebungsluft ausgesetzt sind. Für Kühl- bzw. Raumzellen der hier interessierenden Art und Größe sind derartige, kofferförmige Kühlgeräte nicht geeignet.

Der Erfindung liegt die Aufgabe zugrunde, Raumzellen der eingangs genannten Art dahingehend zu verbessern und auszugestalten, daß diese bei kompakter Bauweise weitestgehend schadstoffrei und insbesondere autark betreibbar sind, und zwar verbunden mit der Maßgabe, solche Zellen nicht nur in Bereichen mit hohen Außentemperaturen, also kühlend betreiben zu können, sondern im Bedarfsfall auch in Bereichen mit extremen Tieftemperaturen, wo es, wie vorerwähnt, eher darum geht, den Aufbewahrungsraum auf einem verträglichen Frischhaltetemperaturniveau zu halten.

Diese Aufgabe ist mit einer Raumzelle der eingangs genannten Art nach der Erfindung durch die im Kennzeichen des unabhängigen Patentanspruches 1 angeführten Merkmale gelöst.

Unter Betriebsmittel sind hierbei also die Brennstoffzelle, dies hier selbstverständlich in Form eines sogenannten Zellenstacks als Strom- und Wärmequelle, und das Kühlaggragat zu verstehen. Abgesehen davon, daß der außer dem Sauerstoff bzw. Luftsauerstoff der Brennstoffzelle zuzuführende Wasserstoff in einer vorgeschalteten, apparativ etwas aufwendigeren Reformer-Gasaufbereitung bekannter Art gewonnen werden kann, die zudem die Bereithaltung dafür geeigneter, aufspaltbarerer Betriebsstoffe verlangt, werden jedoch als Wasserstoffquelle ein Wasserstoffbehälter und als Sauerstoffquelle ein Sauerstoffbehälter ebenfalls bekannter Art bevorzugt verwendet, weil hierbei noch nicht einmal CO₂ anfällt und damit die Forderung nicht nur eines weitestgehenden, sondern sogar eines schadstofffreien Betriebes erfüllt ist.

Unter den Mitteln zur Temperierung des Aufbewahrungsraumes sind dabei insbesondere in diesem angeordnete und geeignete Wärmetauscher zu verstehen oder auch solche Wärmetauscher, die indirekt via Lufttransport im Aufbewahrungsraum zur Wirkung gebracht werden können, was noch näher erläutert wird.

Bei Kühlung des Aufbewahrungsraumes dient der von der Brennstoffzelle gelieferte Strom oder gegf. auch die gelieferte Wärme zum Betrieb des Kälteaggregates, dessen Verdampfer sich im Aufbewahrungsraum befindet. Der Kondensator könnte zwar außerhalb des Gehäuses angeordnet werden, bevorzugt wird dieser aber ebenfalls im Betriebsmittelraum angeordnet und mit geeigneten Mitteln dafür gesorgt, daß dessen Wärme aus diesem abgeführt wird, zumal die von der Brennstoffzelle erzeugte Wärme bei Nichtnutzung für das Kälteaggregat ebenfalls aus dem Betriebsmittelraum abgeführt werden muß.
Falls bei extrem niedrigen Außentemperaturen die Temperatur im Aufbewahrungsraum auf dem Niveau üblicher Frischhaltetemperatur gehalten werden soll, also bei bspw. 7-10°C, so verlangt dies eine entsprechend geregelte Wärmezufuhr in diesen Raum.

Das ganze Gehäuse ist vorzugsweise in Form eines transportablen Containers mit den gängigen Containerabmessungen ausgebildet, um den modernen Transportbedingungen zu genügen. In diesem Zusammenhang ist es aber auch möglich, und zwar um den gleichen Bedingungen zu genügen, das Gehäuse aus einem transportablen, tragfähig ausgebildeten und wärmeisolierten Boden zu bilden, auf dem die Gehäusewände und die Gehäusedecke aus vorgefertigten, miteinander dicht verspannbaren Wandbauelementen errichtet sind.

Außerdem ist der Betriebsmittelraum vom Aufbewahrungsraum durch eine wärmeisolierte Trennwand abgeteilt, um den thermischen Verhältnissen im Gehäuse besser genügen zu können. Diese damit erreichbare Gliederung des Zelleninnenraumes muß dabei nicht zwingend durch eine vertikale Trennwand erfolgen, sondern es kann auch eine horizontale Gliederung vorgesehen werden, d.h., eine zur Zellendecke und/oder zum Zellenboden parallele Erstreckung der Trennwand, was im Extremfall bedeutet, daß der Betriebsmittelraum sich zweiteilig unter und über dem Aufbewahrungsraum befindet, was insbesondere in Einsatzgebieten mit extrem niedrigen Außen- und auch Bodentemperaturen von Interesse ist, wobei bspw. die von der Brennstoffzelle erzeugte Wärme durch entsprechend aufgeteilte Wärmetauscher auf alle drei bzw. zwei Räume verteilt werden kann.

Abgesehen von der bevorzugten Benutzung eines Wasserstoffbehälter vorzugsweise in Form eines Druckbehälters für die Versorgung der Brennstoffzelle kommt für das zweite, der Brennstoffzelle zuzuführende Betriebsmittel ebenfalls ein Druckbehälter für den Sauerstoff bevorzugt in Betracht.

Die erfindungsgemäß autark zu betreibende Raumzelle wird nachfolgend anhand der zeichnerischen Darstellung von Ausführungsbeispielen näher erläutert.

Es zeigt
- Fig. 1: perspektivisch die kastenförmige Raumzelle in Form eines Containers;
- Fig. 2: perspektivisch die aus vorgefertigten Wandbauelementen erstellte Raumzelle;
- Fig. 3: schematisch die Raumaufteilung der Zelle mit den darin untergebrachten wesentlichen Betriebskomponenten;
- Fig. 4: schematisch eine weitere Verschaltungsart der Betriebskomponenten und
- Fig. 5: einen vertikalschnitt durch die Raumzelle in besonderer Ausführungsform.

Die Raumzelle besteht nach wie vor aus einem zugänglich durch eine dicht verschließbare Tür T begehbaren, allseitig wärmeisolierten, kastenförmigen Gehäuse 1 mit integriertem Kühlaggregat 7.

Für eine solche Raumzelle ist nun wesentlich, daß der Innenraum des Gehäuses 1 in einen Aufbewahrungsraum 2 und einen Betriebsmittelraum 3 gegliedert ist. Der Aufbewahrungsraum 2 ist dabei mit Mitteln 4 zu dessen Temperierung versehen, und im Betriebsmittelraum 3 ist eine mit einer Betriebsmittelquelle 5 verbundene Brennstoffzelle 6 angeordnet, die elektrisch über eine Leitung 13 mit dem ebenfalls im Betriebsmittelraum 3 angeordneten Kühlaggregat 7 in Verbindung steht.
Unter Gliederung in zwei Räume ist dabei zunächst nur zu verstehen, die zum eigentlichen Aufbewahrungsbereich distanzierte Anordnung der für den Betrieb einer solchen Raumzelle notwendigen, technischen Komponenten.

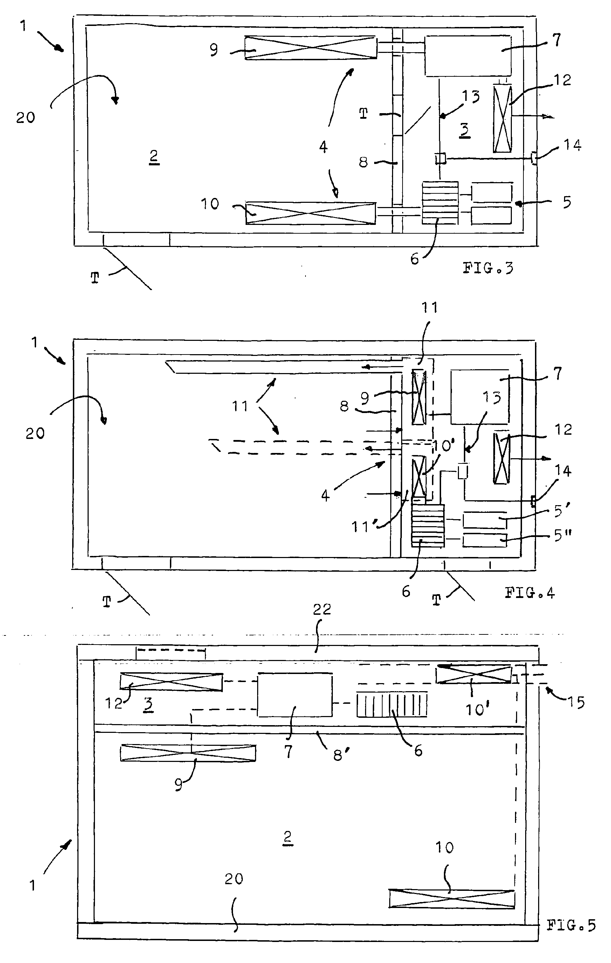

Wie aus Fig.3 und 4 ersichtlich, werden diese beiden Räume 2,3 zweckmäßiger jedoch durch eine wärmeisolierte Trennwand 8 voneinander abgeteilt, wobei der Zugang zum Betriebsmittelraum entweder durch eine Tür T in der Trennwand 8 oder in einer Außenwand erfolgen kann.

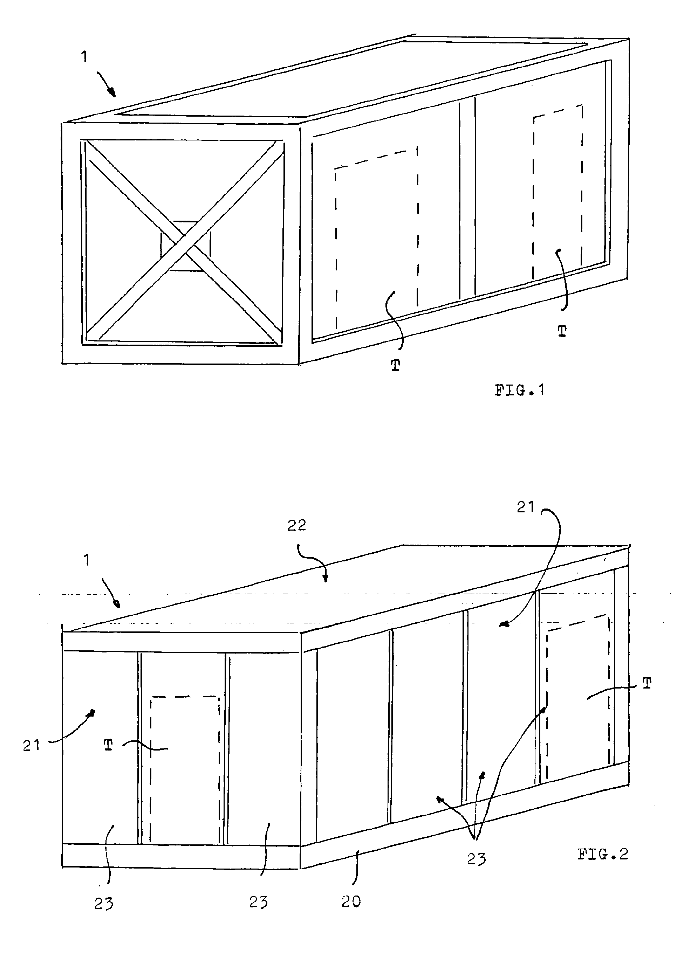

Gemäß Fig.1 kann das Gehäuse 1 in Form eines transportablen Containers ausgebildet sein, was den Vorteil hat, daß das Ganze betriebsfertig vor Ort verbracht werden kann, das Gehäuse also selbst die Transportverpackung für die darin installierten Komponenten darstellt.
Das Gehäuse 1 ist dabei gemäß Fig.2 für den Transport raumsparend aus einem transportablen, tragfähig ausgebildeten und wärmeisolierten Boden 20 gebildet, auf dem die Gehäusewände 21 und die Gehäusedecke 22 aus vorgefertigten, miteinander dicht verspannbaren Wandbauelementen 23 vor Ort zu errichten sind. Dies bedarf keiner näheren Erläuterung, da derart ausgebildete Zellen, wie einleitemd erwähnt, hinlänglich bekannt sind, nur mit dem Unterschied, daß dabei in der Regel der Boden nicht aus einem stabilen, tragfähigen Rahmen mit Deck- und Bodenplatte und entsprechender wärmeisolierender Füllung ausgebildet ist.

Aus den vorerwähnten Gründen wird als Wasserstoffquelle 5 ein Wasserstoffdruckbehälter 5' verwendet und gleiches gilt auch für die notwendige Sauerstoffzufuhr zur Brennstoffzelle 6, d.h., für die Sauerstoffversorgung der Brennstoffzelle 6 ist ein Sauerstoffdruckbehälter 5" ebenfalls im Betriebsmittelraum 3 angeordnet. Normalerweise würde dafür auch eine einfache Luftzufuhr genügen, mit Rücksicht auf den hier mit vorgesehen Einsatz solcher Raumzellen in Bereichen extrem niedriger Außentemperaturen, würde dies nämlich eine Aufwärmung etwa von außen angesaugter Luft erforderlich machen.

Bei den Mitteln 4 zur Temperierung des Aufbewahrungsraumes 2 handelt es sich gemäß Fig.3 um Wärmetauscher 9,10 , die mit dem Kühlaggregat 8 und der Brennstoffzelle 7 in Wirkverbindung stehen. Beim Wärmetauscher 9 handelt es sich um den Verdampfer des Kühlaggregates 7, dessen Kondensator 12 ebenfalls mit im Raum 3 untergebracht ist.

Im Gegensatz dazu können unter Bezug auf Fig.4 die Mittel 4 zur Temperierung des Aufbewahrungsraumes 2 aber auch aus einem diesen und den Betriebsmittelraum 3 verbindenden, gebläsebestücktem (Gebläse nicht dargestellt) Umluftsystem 11 gebildet sein, dem die Wärmetauscher 9,10 des Kühlaggragates 7 und der Brennstoffzelle 6 wahlweise zuschaltbar zugeordnet sind. Diese beiden Umluftsysteme 11,11' sind in Fig.4 nur gestrichelt angedeutet.

Besteht bei der Ausführungsform nach Fig.3 Kühlbedarf für den Aufbewahrungsraum 2, so wird über eine entsprechende Steuerung (nicht dargestellt ) via Brennstoffzelle 6 das Kälteaggregat 7 in Gang gesetzt und der Kühlvorgang vollzieht sich in bekannter Weise unter Abgabe der Wärme am Kondensator 12. Die gleichzeitig in der Brennstoffzelle 6 entstehende Wärme wird ebenfalls in geeigneter Weise abgeführt.
Soll das Temperaturniveau des Aufbewahrungsraumes 2 im Gegensatz dazu bei Aufstellung der Zelle im Freien aus vorerläutertem Grund bei extremen Außentemperaturen angehoben und auf diesem Niveau gehalten werden, so wird in diesem Falle die in der Brennstoffzelle 6 anfallende Wärme dem Wärmetauscher 10 im Raum 2 zugeführt. Da der gleichzeitig anfallende Strom nicht für das Kälteaggregat 7 gebraucht wird, kann dieser in geeigneter Weise einem anderen Nutzen via Anschluß 14 zugeführt werden, sofern dieser nicht ebenfalls für die Aufwärmung des Raumes 2 mit genutzt wird.

Die Ausführungsform nach Fig.4 arbeitet nach dem gleichen Prinzip, und zwar lediglich mit dem Unterschied, daß die Wärmetauscher 9,10 in zwei Umluftsysteme 11,11', wie stark schematisiert angedeutet, integriert sind.
Sofern Gebläse zum Einsatz kommen, kann von der Brennstoffzelle 6 anfallender Überschußstrom über eine mit installierte Ladestation Akkus zugeführt werden, der dann für solche Gebläse zur Verfügung stehen kann.

In Fig.5 ist verdeutlicht, daß die vorerwähnte Trennwand 8 zur Gliederung des Zelleninnenraumes nicht zwingend, wie in den Fig.3,4 dargestellt, vertikal angeordnet sein muß, sondern diese auch horizontal orientiert, mit Abstand parallel zum Boden 20 und/oder zur Decke 22 der Zelle angeordnet werden kann. Das in Fig.5 schematisch dargestellte Ausführungsbeispiel verdeutlicht dabei eine zweifachgliederung des Zelleninnenraumes, wobei sich also der Betriebsmittelraum 3 mit den darin anzuordnenden Komponenten über dem Aufbewahrungsraum 2 erstreckt. Außerdem ist dabei mit angedeutet, daß die Brennstoffzelle 6 mit einem aus dem Betriebsmittelraum 3 nach außen führenden Wärmeabfuhranschluß 15 versehen sein kann, der bspw. dann durch entsprechende Schaltungsmittel zur Wirkung gebracht werden kann, wenn die von der Brennstoffzelle 6 erzeugte Wärme beim Kühlen des Aufbewahrungsraumes 2 nicht verwertbar ist.
Ein nähere Erläuterung der notwendigen Steuerung mit zugehörigen Sensoren oder Art und Bemessung der Wärmetauscher und auch der Kühlaggregate erübrigt sich, da dafür dem Fachmann alle notwendigen Mittel und Kenntnisse zur Verfügung stehen.
Dies gilt auch dafür, daß im Betriebsmittelraum Einrichtungen zur Stromsammlung und Stromwandlung angeordnet und diese mit der Brennstoffzelle 6 und dem Kühlaggregat 7 in sinngemäßer Wirkverbindung stehend verschaltet sind.

## Patentansprüche

1. Raumzelle zur temperierten Aufbewahrung von insbesondere Lebensmitteln aber auch sonstigen temperaturempfindlichen Gütern, bestehend aus einem zugänglich begehbaren, allseitig wärmeisolierten, kastenförmigen Gehäuse (1), mit integriertem Kühlaggregat (7),
**dadurch gekennzeichnet,**
**daß** der Innenraum des Gehäuses (1), das aus einem tragfähigen und wärmeisolierten Boden (20) gebildet ist, auf dem die Gehäusewände (21) und die Gehäusedecke (22) aus vorgefertigten, miteinander dicht verspannbaren Wandbauelementen (23) errichtet sind, in einen Aufbewahrungsraum (2) und einen Betriebsmittelraum (3) vertikal oder horizontal gegliedert ist, wobei der Aufbewahrungsraum (2) mit Mitteln (4) zu dessen Temperierung versehen ist, und daß im Betriebsmittelraum (3) eine mit einer Betriebsmittelquelle (5) verbundene Brennstoffzelle (6) angeordnet ist, die elektrisch mit dem ebenfalls im Betriebsmittelraum (3) angeordneten Kühlaggregat (7) in Wirkverbindung steht, wobei der Betriebsmittelraum (3) vom Aufbewahrungsraum (2) durch eine wärmeisolierte Trennwand (8) abgeteilt ist.

2. Raumzelle nach Anspruch 1,
**dadurch gekennzeichnet,**
**daß** die wärmeisolierte Trennwand (8), horizontal orientiert, mit Abstand parallel zum Boden (20) und/oder zur Decke (22) der Zelle angeordnet ist.

3. Raumzelle nach Anspruch 1 oder 2,
**dadurch gekennzeichnet,**
**daß** die Betriegsmittelquelle (5) ein Wasserstoffbehälter (5') und ein Sauerstoffbehälter (5") ist.

4. Raumzelle nach Anspruch 3,
**dadurch gekennzeichnet,**
**daß** die Behälter (5',5") Druckbehälter sind.

5. Raumzelle nach einem der Ansprüche 1 bis 4,
**dadurch gekennzeichnet,**
**daß** die Mittel (4) zur Temperierung des Aufbewahrungsraumes (2) Wärmetauscher (9,10) sind, die mit dem Kühlaggregat (8) und der Brennstoffzelle (6) in Wirkverbindung stehen.

6. Raumzelle nach einem der Ansprüche 1 bis 5,
**dadurch gekennzeichnet,**
**daß** die Brennstoffzelle (6) mit einem aus dem Betriebsmittelraum (3) nach außen führenden Wärmeabfuhranschluß (15) versehen ist.

7. Raumzelle nach einem der Ansprüche 1 bis 6,
**dadurch gekennzeichnet,**
**daß** die Mittel (4) zur Temperierung des Aufbewahrungsraumes (2) aus einem diesen und den Betriebsmittelraum (3) verbindenden, gebläsebestücktem Umluftsystem (11,11') gebildet sind, dem die Wärmetauscher (9,10) des Kühlaggragates (7) und der Brennstoffzelle (6) wahlweise zuschaltbar zugeordnet sind.

8. Raumzelle nach einem der Ansprüche 1 bis 7,
**dadurch gekennzeichnet,**
**daß** im Betriebsmittelraum Einrichtungen zur Stromsammlung und Stromwandlung angeordnet und diese mit der Brennstoffzelle (6) und dem Kühlaggregat (7) in sinngemäßer Wirkverbindung stehend verschaltet sind.
